# EUROPÄISCHE PATENTSCHRIFT

(11) **EP 1 089 821 B1**
(45) Veröffentlichungstag und Bekanntmachung des Hinweises auf die Patenterteilung: **23.10.2002**
(21) Anmeldenummer: 98910664.6
(22) Anmeldetag: 13.02.1998
(51) Int. Cl.: B01L 3/00, G01N 35/00, G01N 33/53

(54) **MIKROKAMMERARRAY MIT HOHER KAMMERDICHTE UND VERFAHREN ZU SEINER HERSTELLUNG**
MICROCOMPARTMENT ARRAY WITH HIGH COMPARTMENT DENSITY AND PROCESS FOR PRODUCING THE SAME
AGENCEMENT DE MICROCOMPARTIMENTS DE HAUTE DENSITE ET SON PROCEDE DE FABRICATION

(30) Priorität: 15.02.1997 DE 19705910
(43) Veröffentlichungstag der Anmeldung: 11.04.2001
(73) Patentinhaber: INSTITUT FÜR PHYSIKALISCHE HOCHTECHNOLOGIE E.V., 07743 Jena (DE)
(72) Erfinder: ERMANTRAUT, Eugen, D-07745 Jena (DE); KÖHLER, Johann, Michael, D-07751 Golmsdorf (DE); MAYER, Günter, D-07749 Jena (DE); WOHLFART, Klaus, D-07751 Laasan (DE)
(74) Vertreter: Pfeiffer, Rolf-Gerd, Dipl.-Phys.
(86) Internationale Anmeldenummer: EP9800835
(87) Internationale Veröffentlichungsnummer: WO98035755

(56) Entgegenhaltungen:
- WO-A-93/09668
- BE-A- 1 009 875
- US-A- 5 462 839
- PATENT ABSTRACTS OF JAPAN vol. 014, no. 189 (P-1037), 17.April 1990 & JP 02 035360 A (TOPPAN PRINTING CO LTD), 5.Februar 1990, in der Anmeldung erwähnt
- PATENT ABSTRACTS OF JAPAN vol. 014, no. 301 (P-1069), 28.Juni 1990 & JP 02 095258 A (TOPPAN PRINTING CO LTD), 6.April 1990, in der Anmeldung erwähnt

## Beschreibung

Die Erfindung betrifft ein Mikrokammerarray mit einer hohen Kammerdichte. Arrays von Mikrokammern mit Einzelkammervolumina im Submikroliterbereich finden in der Biotechnologie, beim Wirkstoffscreening und in der kombinatorischen Chemie für eine parallele und automatisierte Handhabung kleiner Flüssigkeitsmengen Anwendung.

Es sind Arrays mit Kavitäten und Verfahren zu ihrer Herstellung bekannt, die auf der Basis von Kunstharzen (JP 2-95258; JP 2-35360) oder auf der Basis von hydrophoben Polymeren, die einer selektiven Plasmabehandlung ausgesetzt wurden (US-PS 5,041,266; US-PS 5,229,163; US-PS 4,741,619), gefertigt sind. In DE 42 09 064 A1 werden die Kammerausnehmungen durch einfaches mechanisches Bohren in einem Teflonsubstrat erzeugt. Die Hauptnachteile dieser Gruppe von Kammerarrays besteht darin, daß sich, in bezug auf vorliegende Erfindung, mit heute bekannten Techniken nur Ausnehmungen mit relativ großen Abständen herstellen lassen und daß diese Kammerarrays nicht autoklavierbar und somit Wegwerfartikel sind.

Auch ist die Herstellung von mikromechanischen Strukturen und Kavitäten in halbleitendem Material oder Glas auf der Basis naßchemischer Ätztechniken (DE 39 15 920 A1) oder Trockenätztechniken in Verbindung mit fotolithografischen Schritten (US-PS 5,462,839) beschrieben. G. Mayer, J.M. Köhler beschreiben in "Microchemical Compartments for Biotechnological Applications: Fabrication and Investigation of Liquid Evaporation, Proc. of Eurosensors X, Vol 2, Leuven, Belgium, Sept. 1996" Mikrokammern im Submikroliterbereich, die aus Siliziumwafern hergestellt werden, in die mittels geeigneter Maskierungsverfahren und anisotroper naßchemischer Ätztechniken eine Vielzahl von Ausnehmungen eingebracht sind. Diese Kammern werden je nach gewähltem Anwendungsfall mit Flüssigkeiten, insbesondere wässrigen Lösungen, mittels Mikropipetten befüllt. Bei letzt beschriebener Gruppe von Mikroarrays besteht die Gefahr, daß ein Übersprechen der einzelnen Kammerinhalte in benachbarte Kammern möglich ist. Da man, aufgrund der geringen Kammervolumina und eines dadurch bedingten spürbaren Verdunstungsverlustes bestrebt ist, in einer gesättigten Dampfatmosphäre zu arbeiten, erhöht sich die Übersprechwahrscheinlichkeit bspw. durch Wasserdampfkondensation an Bereichen zwischen den Kammern noch zusätzlich. Um diese Gefahr einer möglichen Vermischung von Kammerinhalten bzw. Kontaminationen weitestgehend zu unterdrücken, bleibt nach dem bekannten Stand der Technik nur die Möglichkeit, die Kammern voneinander hinreichend beabstandet auszubilden, was die Kammeranzahl pro vorgegebener Fläche reduziert.
Weiterhin ist aus WO 93/09668 A1 bekannt, ein Übersprechen benachbarter Regionen eines Trägers durch das Einbringen einer ersten funktionellen Oberflächenbelegung (z.B. einer hydrophilen Substanz) auf die Regionen zu verhindern, in dem das Benetzungsverhalten der zwischenliegenden Oberflächenbereiche eine entgegengesetzte Wirkung (z.B. hydrophob) hat.

Der Erfindung liegt die Aufgabe zugrunde, ein Mikrokammerarray mit einer möglichst hohen Kammerdichte pro Fläche und ein Verfahren zu ihrer Herstellung anzugeben, bei dem ein Übersprechen benachbarter Kammerinhalte selbst bei einer Kammerüberfüllung unterbunden ist, ohne daß die Art der Kammerbefüllung einer Veränderung bedarf.

Die Aufgabe wird durch die kennzeichnenden Merkmale der Patentansprüche 1 und 5 gelöst. Vorteilhafte weitere Ausgestaltungen sind durch die Unteransprüche erfaßt.

Das Wesen der Erfindung besteht darin, daß bei einem mit einer Vielzahl von Ausnehmungen versehenen Träger, der als Mikrokammerarray Verwendung finden soll, die Trägeroberflächenbereiche, die die einzelnen kammerartigen Ausnehmungen an der offenen Kammerseite voneinander beabstanden, mit einer funktionellen Gruppe versehen werden, deren Wirkung entgegen der Oberflächenbelegung der Kammerinnenwandungsbereiche ist. Im Falle des Einsatzes von wässrigen Lösungen ist genannten Trägeroberflächenbereichen dabei eine hydrophobe Eigenschaft verliehen, wohingegen die Kammerinnenwandungsbereiche eine hydrophile Eigenschaft aufweisen sollen. Die Verleihung der gewünschten Oberflächenbelegung der genannten Trägeroberflächenbereiche wird im Rahmen der Erfindung dadurch erreicht, daß diese Bereiche wenigstens einmal von einem eine funktionelle Oberflächenbelegung tragenden oder verursachenden Agens versehenen unprofilierten elastomeren Körper kontaktierend erfaßt werden.
Weiterhin liegt es im Rahmen der Erfindung, daß z.B. das Benetzungsund Übersprechverhalten bei wässrigen Lösungen durch Einbringen von hydrophilen Oberflächenbelegungen, wie OH-gruppenreiche, sulfonsäuregruppenreiche oder eine carboxylgruppenreiche Oberflächen im Bereich der Kammerinnenwände zu realisieren und die zweite funktionelle Oberflächenbelegung, welche mit Hilfe eines elastomeren Körpers erzeugt werden sollen und die ein Übersprechen zwischen den Kammern verhindern soll, durch Alkoxygruppen, Flouralkangruppen, Flourarylgruppen, Oxyarylgruppen, Alkoxysilane oder Alkyl- oder Arylsiloxane zu erreichen.

Die Erfindung soll nachstehend anhand eines Ausführungsbeispiels und schematischer Zeichnungen näher erläutert werden. Es zeigen:
- Fig. 1: beispielhaft ein Mikrokammerarray,
- Fig. 2: eine Teilschnittebene des Mikrokammerarrays nach Fig. 1 bei einer Schnittführung entlang einer Linie A-A,
- Fig. 3: eine besondere Ausgestaltung der Oberfläche des Mikrokammerarrays in Vorbereitung zur Erzeugung einer hydrophoben Oberflächenbelegung,
- Fig. 3a und 3b: je eine Variante einer Ausbildung nach Fig. 3,
- Fig. 4: angedeutet die Erzeugung einer hydrophoben Oberflächenbelegung,
- Fig. 5a: zwei benachbarte, überfüllte Einzelkammern eines Mikrokammerarrays und
- Fig. 5b: zwei benachbarte, normalbefüllte Einzelkammern eines Mikrokammerarrays.

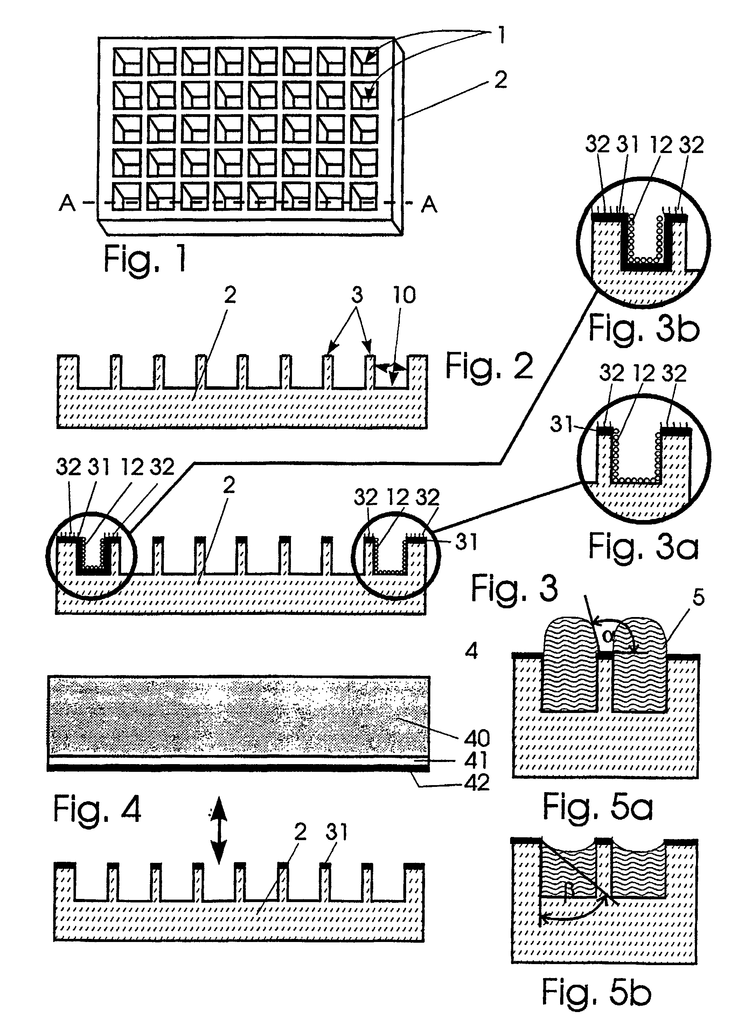

In Figur 1 ist ein Mikrokammerarray, bestehend aus einem Träger 2, der aus Silizium besteht und Teil eines üblichen Siliziumwafers sein kann, dargestellt, welchem eine Vielzahl von kammerartigen Ausnehmungen 1 gegeben ist. In Realität besitzen dabei die Ausnehmungen Abmessungen in der Größenordnung von 800 µm • 800 µm bei einem Volumen von 140 nl und das Mikrokammerarray verfügt in diesem Fall über einhundert solcher Ausnehmungen pro cm². Ebenso sind Mikrokammerarrays mit Kammervolumen in der Größenordnung von 20 nl herstellbar, wobei dann 400 solcher Ausnehmungen/cm² erreichbar sind. Figur 2 zeigt eine Teilschnittebene des Mikrokammerarrays nach Fig. 1 bei einer Schnittführung entlang einer Linie A-A. Im Beispiel wird das Mikrokammerarray zunächst mittels üblicher Sputterverfahren mit einer ca. 50 ... 100 nm dicken Goldschicht 31 ganzflächig beschichtet, wobei in Fig. 3 nur die Goldbeschichtung der Oberflächen 3 der Stegbereiche dargestellt ist. Weiterhin wird ein weiterer Siliziumwafer 40 mit einer elastomeren Beschichtung 41 versehen, die vorteilhaft durch aufgeschleudertes Polydimethylsiloxan, das nach dem Aufschleudern ausgehärtet wird, gebildet ist. Auf diese Silikonelastomerschicht 41 wird einen dünne Schicht 42 einer Substanz mit einer funktionellen Gruppe, hier in Form eines thiofunktionellen Alkans (5% in Ethanol), wie z.B. Hexadecylmercaptan, aufgetragen. Anschließend erfolgt ein Auflegen des derart aktivierten, unprofilierten Silikonstempels 4 auf die Oberfläche des Mikrokammerarrays, wie in Fig. 4 durch einen Doppelpfeil angedeutet. Dadurch wird die Ausbildung einer chemisch sehr stabilen Gold-Thiol-Bindung an der Oberfläche 3 der die offenen Einzelkammern 1 beabstandenden Stege bewirkt, danach wird der Stempel 4 entfernt. Die auf den Bereichen 3 des Mikrokammerarrays gebildete monomolekulare Schicht 32 eines Thioalkans modifiziert nur diese Bereiche, während die Kammerinnenwandungen 10 unbeeinflußt, im vorliegenden Beispiel als reine, nicht dargestellte Goldoberflächen, verbleiben.
In einem sich anschließenden weiteren Schritt kann durch selektives Ätzen die an den Kammerinnenwandungen verbliebene dünne Goldschicht abgetragen werden, ohne daß dabei die mit der Thioalkanschicht modifizierten Oberflächenbereiche 32 angegriffen werden (vgl. Fig. 3a). Als Ätzmittel hierfür eignet sich eine 0,1 M KCN-Lösung mit 0,001 M K₃Fe(CN)₆ als Oxidationsmittel. Die Ätzzeit liegt für eine bspw. 50 nm dicke Goldschicht unter 1 min.
Der sich eben beschriebene anschließende weitere Schritt kann jedoch auch so ausgeführt werden, daß die an den Kammerinnenwandungen verbliebene Goldschicht 31 nicht selektiv abgetragen, sondern durch eine weitere selektive Reaktion mit einer weiteren thiofunktionellen Gruppe, z.B. Thioglycerin, modifiziert wird. Dabei bindet das Thioglycerin an den blanken goldbeschichteten Kammerinnenwandungen unter Bildung einer Schicht 12, nicht jedoch an den mit Thioalkan modifizierten goldbeschichteten Oberflächenbereichen 32, was in einem Teilschnitt in Fig. 3b angedeutet ist. Dadurch werden den Kammerinnenwandungen ebenfalls hydrophile Eigenschaften verliehen und das Benetzungsverhalten gegenüber den hydrophoben Außenbereichen sogar noch weiter verbessert.

Bei einer Befüllung des Mikrokammerarrays mit wässrigen Lösungen, wie in den Figuren 5a und 5b in einem Teilausschnitt angedeutet, wirkt die gebildete Thioalkanschicht stark hydrophob, wohingegen die Oberflächen 10 der Kammerinnenwandungen sich hydrophil verhalten. Dies führt dazu, daß selbst bei einer Überfüllung der Einzelkammern (vgl. Fig. 5a) mit dem nahezu doppelten Kammervolumen ein sich ausbildender tropfenförmiger Überhang **5** einen Randwinkel α von > 90° annimmt, ohne daß es zum Übersprechen der Flüssigkeit zwischen den benachbarten Einzelkammern kommt. Im Falle einer Normalbefüllung stellt sich in Beispiel nach Fig. 5b ein Randwinkel β von > 30° ein.

Die Erfindung ist nicht auf das dargestellte Ausführungsbeispiel beschränkt. Insbesondere beim Einsatz nichtwässriger Lösungen, wie z.B. in Ethanol, Toluol oder Acetonitril kommt es im Rahmen der Erfindung darauf an, das Benetzungsverhalten genannter Oberflächenbereiche 3, deutlich verschieden zum Benetzungsverhalten der Kammerinnenwandungsbereiche auszubilden, was durch eine geeignete Auswahl unterschiedlicher erster und zweiter funktioneller Gruppen geschieht, wobei für die erste funktionelle Gruppen dann nichtbenetzend wirkende Substanzen in Frage kommen, wie z.B. Alkane und Silane, und für die zweiten funktionellen Gruppen benetzend wirkende Substanzen in Frage kommen, wie z.B. Glycerin, Alkohole, Carbonsäuren oder Ester und die Aufbringung der zweiten funktionellen Gruppe vermittels genannten elastomeren Stempels 4 gelingt. Auch die beispielhafte Ausbildung des elastomeren Stempels als ebener, unprofilierter Platte stellte keine Beschränkung der Erfindung nur darauf dar. Ebenso wäre es möglich, eine in einer Dimension gewölbte Platte oder einen walzenförmigen Körper einzusetzen, der die zweite funktionelle Gruppe trägt und durch Abrollung die gewünschten Oberflächenbereiche 3 des Mikrokammerarrays erfaßt.

## Patentansprüche

1. Mikrokammerarray, bestehend aus einem, mit einer Vielzahl kammerartiger Ausnehmungen (1) versehenen Träger (2), der aus Silizium besteht, **dadurch gekennzeichnet, daß** der die Ausnehmungen (1) beinhaltende Träger (2) zumindest an den Oberflächen (3) der Stegbereiche zwischen den Ausnehmungen (1) mit einer dünnen Goldschicht (31) und diese Goldschicht (31) mit einer funktionellen Oberflächenbelegung (32) versehen ist, wobei die Kammerinnenwandungen (10) der kammerartigen Ausnehmungen (1) mit einer in der Wirkung der zweiten funktionellen Oberflächenbelegung (32) entgegengesetzten ersten funktionellen Oberflächenbelegung (12) versehen sind.

2. Mikrokammerarray nach Anspruch 1, **dadurch gekennzeichnet, daß** im Falle des Einsatzes von wässrigen Lösungen der zweiten funktionellen Oberflächenbelegung (32) eine hydrophobe Eigenschaft und der ersten funktionellen Oberflächenbelegung (12) eine hydrophile Eigenschaft aufgeprägt ist.

3. Mikrokammerarray nach Anspruch 2, **dadurch gekennzeichnet, daß** die hydrophoben Oberflächenbereiche durch eine auf der Goldschicht (31) im Bereich der Siliziumstegoberflächenbereiche (3) erzeugten monomolekularen Thioalkanoberflächenbelegung (32) gebildet sind.

4. Mikrokammerarray nach Anspruch 1 bis 3, **dadurch gekennzeichnet, daß** auch die Kammerinnenwandungen (10) mit einer Goldbeschichtung (31) versehen sind, welche eine Oberflächenmodifikation (12) mit einer weiteren thiofunktionellen Gruppe erfahren hat, die genannte monomolekulare Thioalkanoberflächenbelegung (32) unbeeinflußt läßt.

5. Verfahren zur Herstellung von Mikrokammerarrays unter Einsatz eines mit einer Vielzahl von Ausnehmungen (1) versehenen Trägers (2), der aus Silizium besteht, **dadurch gekennzeichnet, daß** ein Träger (2) verwendet wird, der zumindest an den Oberflächen (3) der Stegbereiche, die die einzelnen kammerartigen Ausnehmungen (1) an der offenen Kammerseite voneinander beabstanden, mit einer dünnen Goldschicht (32) versehen wird, welche mit einem, eine zweite funktionelle Oberflächenbelegung tragenden oder verursachenden Agenz versehenen, unprofilierten elastomeren Körper (4) wenigstens einmal kontaktierend erfaßt wird.

6. Verfahren zur Herstellung von Mikrokammerarrays nach Anspruch 5, **dadurch gekennzeichnet, daß** genannte Goldschichtbereiche (31) der kontaktierenden Einwirkung eines elastomeren Körpers (4) ausgesetzt werden, der an seiner den Goldschichtbereichen (31) zugewandten Oberfläche mit einem thiofunktionellen Alkan (42) versehen ist.

7. Verfahren zur Herstellung von Mikrokammerarrays nach Anspruch 6, **dadurch gekennzeichnet, daß** im Falle, daß auch die Kammerinnenwandungen mit einer Goldschicht versehen werden, diese durch eine selektive Reaktion mit einer weiteren thiofunktionellen Gruppe modifiziert wird.

## Claims

1. Microcompartment array comprising a base (2) made of silicon and being provided with a plurality of compartment-like recesses (1), **characterized in that** the base (2) containing said recesses (1) is provided at least at the surfaces (3) of the partition ranges between the recesses (1) with a thin gold coat (31) and said gold coat (31) is provided with a functional surfaces covering (32), wherein the interior walls (10) of the compartments of the compartment-like recesses (1) are provided with a first functional surface covering (12) which, in its effect, is opposing the second functional surface covering (32).

2. Microcompartment array as claimed in claim 1, **characterized in that** in the case of using an aqueous solution said second functional surface covering (32) is provided with a hydrophobic property and said first functional surface covering (12) with a hydrophilic property.

3. Microcompartment array as claimed in claim 2, **characterized in that** the hydrophobic surface ranges are formed by a monomolecular thioalkane surface covering (32) produced on the gold coat (31) in the silicon surface partition ranges (3).

4. Microcompartment array as claimed in claims 1 to 3, **characterized in that** the interior walls (10) of the compartments are also provided with a gold coat (31), subjected to a surface modification (12) with a further thio-functional group which does not affect said monomolecular thioalkane surface covering (32).

5. Method for manufacturing microcompartment arrays under use of a base (2) made of silicon and being provided with a plurality of recesses (1), **characterized in that** a base (2) is used which is provided with a thin gold layer (32) at least on the surfaces (3) of the partition ranges, which space apart the individual compartment-like recesses (1) from one another on the open compartment side, said gold layer being at least once contactingly captured by a non-profiled elastomeric body (4) which is provided with an agent carrying or effecting a second functional surface covering.

6. Method for manufacturing microcompartment arrays as claimed in claim 5, **characterized in that** said thin gold coat ranges (31) are subjected to the contacting effect of an elastomeric body (4) which, at its surface being in opposition to said thin gold coat ranges (31) is provided with a thio-functional alkane (42).

7. Method for manufacturing microcompartment arrays as claimed in claim 6, **characterized in that** in the case that the inner walls of the compartments are also provided with a gold layer, the latter is modified by a selective reaction with a further thio-functional group.

## Revendications

1. Un agencement de microcompartiments comprenant un support (2) en silice pourvu d'une multitude de cavités formant des compartiments (1), est **caractérisé en ce qu'**au moins à la surface les couches superficielles (3) des zones intermédiaires faisant pont entre les différents compartiments (1) du support (2), sont recouvertes d'une mince couche d'or (31) et que cette couche d'or (31) est dotée d'une couche superficielle à disposition fonctionnelle (32), ce qui demande d'autre part de conférer aux parois intérieures (10) des compartiments (1) une deuxième couche à disposition fonctionnelle(12) étant opposée à celle de la couche superficielle (32) des zones intermédiaires.

2. L'agencement de microcompartiments selon la revendication 1 est **caractérisé en ce que** dans le cas de l'utilisation de solutions aqueuses une propriété hydrophobe est conférée à la deuxième couche superficielles (32) à disposition fonctionnelle et une propriété hydrophile à la première couche superficielle à disposition fonctionnelle (12).

3. L'agencement de microcompartiments suivant la revendication 2 est **caractérisé en ce que** la disposition hydrophobe des zones superficielles de la couche d'or (31) situées dans les parties intermédiaires de silice (3) faisant fonction de pont entre les microcompartiments sont formées par l'application de thioalcane monomoléculaire (32).

4. L'agencement de microcompartiments suivant les revendication 1 à 3 est **caractérisé en ce que** les parois intérieures des microcompartiments (10) sont également dotées d'une couche d'or (31) ayant subi une modification de la couche superficielle (12) par un autre groupe thiofonctionnel n'exerçant toutefois aucune influence sur la disposition de la surface thioalcane (32).

5. Le procédé destiné à réaliser des microcompartiments sur des supports (2) en silice dotés chacun d'une multitude de cavités formant de microcompartiments (1) est **caractérisé en ce que** les surfaces (3) des zones intermédiaires du support (2) qui séparent les compartiments (1) les uns des autres là où leurs côtés sont ouverts, sont recouvertes d'une mince couche d'or (32) qui au moins une fois entre en contact avec un corps élastomère non profilé (4) portant un agent susceptible à réaliser une couche présentant une deuxième disposition fonctionnelle.

6. Le procédé destiné à réaliser des agencements de mircrocompartiments suivant la revendication 5 est **caractérisé en ce que** les zones recouvertes d'une mince couche d'or (31) sont en contact avec avec un corps élastomère (4) dont la surface située en face des zones recouvertes de la couche d'or sont pourvu d'un alcane thiofonctionnel (42).

7. Le procédé destiné à réaliser des agencements de microcompartiments suivant la revendication 6 est **caractérisé en ce que** dans le cas où les parois intérieures des compartiments sont également recouvertes d'une couche d'or celle-ci par voie d'une réaction sélective sera également modifiée par un autre groupe thiofonctionnel.
